# EUROPEAN PATENT SPECIFICATION

(11) **EP 3 754 213 B1**
(45) Date of publication and mention of the grant of the patent: **30.03.2022**
(21) Application number: 19754560.1
(22) Date of filing: 14.02.2019
(51) Int. Cl.: F16C 32/06, F16C 27/02, B05B 5/04

(54) **SPINDLE DEVICE**
SPINDELVORRICHTUNG
DISPOSITIF BROCHE

(30) Priority: 15.02.2018 JP 2018024673
(43) Date of publication of application: 23.12.2020
(73) Proprietor: NSK LTD., Shinagawa-Ku Tokyo 141-8560 (JP)
(72) Inventor: KOBAYASHI Naoya, Fujisawa-shi, Kanagawa 251-8501 (JP); TAKAHASHI Atsushi, Fujisawa-shi, Kanagawa 251-8501 (JP); KATSUNO Yoshiaki, Fujisawa-shi, Kanagawa 251-8501 (JP)
(74) Representative: Grünecker Patent- und Rechtsanwälte PartG mbB
(86) International application number: PCT/JP2019/005404
(87) International publication number: WO 2019/160054

(56) References cited:
- WO-A1-2009/104542
- WO-A1-2017/009072
- JP-A- 2003 278 751
- JP-A- 2006 077 797
- JP-A- 2006 077 797
- JP-A- 2016 223 553
- JP-A- 2016 223 553
- JP-A- 2018 021 625

## Description

### Technical Field

The present invention relates to a spindle device according to the preamble of claim 1. Such a spindle device is known from JP 2016-223553 A. The present invention relates in particular to a spindle device using an air turbine drive system.

### Background Art

Spindle devices used in electrostatic coating machines are known. For example, JP2016-223553 A discloses the features of the preamble of claim 1, a spindle device which includes a journal bearing which supports a rotating shaft in a radial direction, a thrust bearing which supports the rotating shaft in a thrust direction, a housing which supports the rotating shaft via the journal bearing and the thrust bearing, and a cover located on an outer peripheral side of the housing. In the above spindle device, an O-ring is arranged between the housing and the cover to absorb the vibration caused by the high speed rotation and stabilize the operation of the spindle. Another spindle device using an air turbine drive system is known from JP 2006-077797 A.

In particular, in JP 2016-223553 A, it is described that a position of the O-ring is defined with an axial center of the housing as a starting point so that a front side of the rotating shaft swings greatly, and even when a high-strength material is used for the O-ring, the amount of deformation is increased to sufficiently increase the vibration damping effect.

### Summary of Invention

### Technical Problem

The spindle device described in JP 2016-233533 A aims at a vibration damping effect when a high-strength material is used for the O-ring. Generally, when the whirling of the rotating shaft becomes large due to the vibration, the journal bearing (radial bearing) or the thrust bearing contacts the rotating shaft, resulting in a decrease in the rotating speed.

Since the arrangement of the O-ring with respect to a position of the radial bearing is important for actual vibration damping, not the center of the housing, further improvement is required.

An object of the invention is to provide a spindle device capable of enhancing a vibration damping effect and stably rotating a rotating shaft.

### Solution to Problem

The above object of the invention is achieved by the following configurations.
(1) A spindle device including:
   a rotating shaft which has a plurality of turbine blades installed in a circumferential direction and is configured to mount a mounting object on a tip;
   a housing which accommodates the rotating shaft;
   a radial bearing which is attached to the housing and floatingly supports the rotating shaft in a non-contact manner with respect to the housing by supplying gas;
   a thrust bearing which is attached to the housing and supports the rotating shaft in a thrust direction with respect to the housing by supplying gas;
   a case which is arranged to surround an outer peripheral surface of the housing; and
   a plurality of O-rings which are arranged between the housing and the case and supports the housing with respect to the case, where:
      the spindle device rotationally drives the rotating shaft by ejecting gas to the plurality of turbine blades;
      a distance from a rear end surface of the thrust bearing to a center of gravity of the rotating shaft is larger than a diameter of an area center of the thrust bearing;
      at least one O-ring is arranged between a center of the radial bearing and the center of gravity of the rotating shaft in an axial direction of the rotating shaft; and
      two O-rings are arranged on the rear end side of the housing from the center of the radial bearing.
(2) A spindle device according to (1), where
   at least one O-ring is arranged closer to the tip side than the center of gravity of the rotating shaft in the axial direction of the rotating shaft.
(3) The spindle device according to (1) or (2), where
   the radial bearing and the thrust bearing are cylindrical porous members.

### Advantageous Effects of Invention

According to the spindle device of the invention, a larger moment can be received by the O-rings and the vibration damping effect is enhanced, and therefore the rotating shaft can be stably rotated.

### Brief Description of Drawings

Fig. 1 is a cross-sectional view of a spindle device according to an embodiment of the invention.
Fig. 2 is a half cross-sectional view of the spindle device illustrated in Fig. 1.

### Description of Embodiment

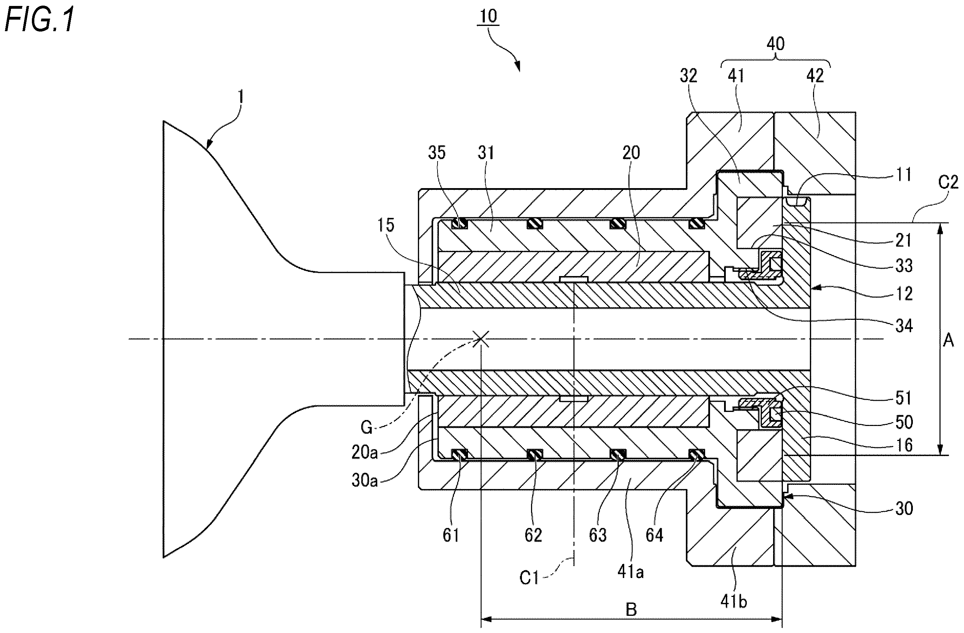

Hereinafter, a spindle device according to an embodiment of the invention will be described in detail with reference to the drawings. In the following description, a left side illustrated in Fig. 1 is called a front side and a right side is called a rear side.

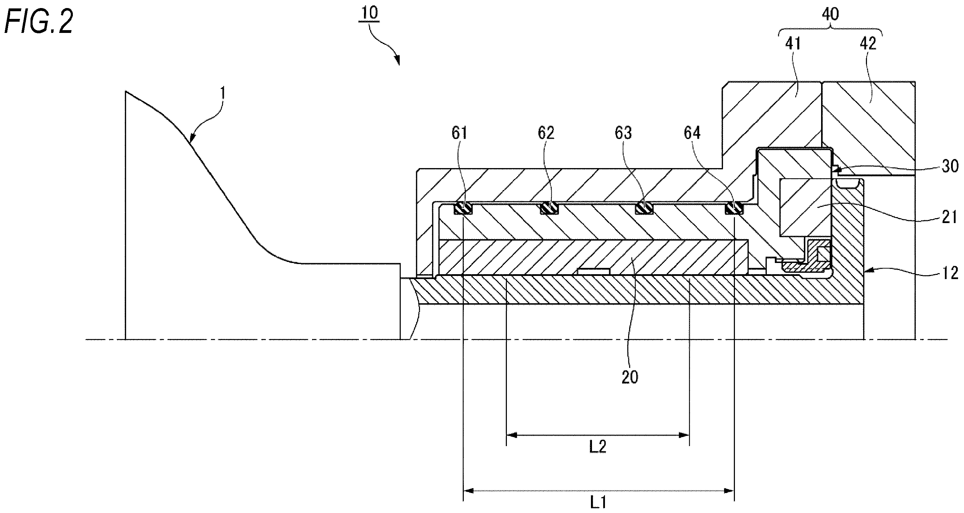

As illustrated in Figs. 1 and 2, a spindle device 10 of the embodiment is an air turbine drive type spindle device used for an electrostatic coating machine. The spindle device mainly includes a rotating shaft 12 provided with a plurality of turbine blades 11 in a circumferential direction, a radial bearing 20, which is a static pressure gas bearing that supports the rotating shaft 12 in the radial direction, a thrust bearing 21 which is a static pressure gas bearing that supports the rotating shaft 12 in a thrust direction, a magnet which attracts the rotating shaft 12 in the thrust direction, a housing 30 which accommodates the rotating shaft 12, and a case 40 arranged to surround an outer peripheral surface of the housing 30.

The rotary shaft 12 includes a cylindrical portion 15 with a bell cup (mounting object) 1, which is used for atomizing and spraying paint, attached to a tip side and a disk portion 16 extending radially outward from a rear end of the cylindrical portion 15.

The plurality of turbine blades 11 are formed by processing an outer peripheral surface of the disk portion 16.

The housing 30 includes a cylindrical part 31 provided around the cylindrical portion 15 of the rotating shaft 12 and having the radial bearing 20 attached to an inner peripheral surface thereof and a disk part 32 provided in front of the disk portion 16 of the rotating shaft 12 and extending radially outward from a rear end of the cylindrical part 31. In the disk part 32, an annular groove 33 having a U-shaped cross section (rectangular cross section) is formed to open rearward to accommodate the thrust bearing 21.

The case 40 includes a front case 41 and a rear case 42. The front case 41 includes a small diameter portion 41a provided around the cylindrical part 31 of the housing 30 and a large diameter portion 41b provided around the disk part 32 of the housing 30 and is formed in a hollow and stepped shape. The rear case 42 is also formed in a hollow shape and is fastened and fixed to the rear end surface of the front case 41 by a bolt (not illustrated).

The radial bearing 20 is a cylindrical porous member and faces an outer peripheral surface of the cylindrical portion 15 of the rotating shaft 12. In the bearing 20, the compressed air is blown toward the outer peripheral surface of the cylindrical portion 15 of the rotating shaft 12 by the gas supplied from a rear end surface of the rear case 42 and passing through a bearing air supply path (not illustrated) formed in the case 40 and the housing 30, in such a manner that the rotating shaft 12 is floatingly supported in a non-contact manner with respect to the housing 30. As a result, the rotating shaft 12 is supported by the radial bearing 20 in the radial direction with respect to the housing 30.

The thrust bearing 21 is a cylindrical porous member and an axial rear end surface of the thrust bearing 21 faces a front surface of the disk portion 16 of the rotating shaft 12. The thrust bearing 21 blows compressed air toward the front surface of the disk portion 16 of the rotating shaft 12 by supplying gas from a path branched from the bearing air supply path.

The magnet 50 is held by a magnet yoke 51 and the magnet yoke 51 is screwed and attached to a magnet attaching portion 34 formed inside the disk part 32 of the housing 30. Here, the magnet 50 closely faces the front side surface of the disk portion 16.

Therefore, the magnetic force of the magnet 50 pulls the disk portion 16 forward. The thrust bearing 21 generates reaction force by blowing compressed air toward the front side surface of disk portion 16 and the rotating shaft 12 is supported in the thrust direction with respect to the housing 30 by the attractive force of the magnet 50 and the reaction force of the thrust bearing 21.

The spindle device 10 of the embodiment has a rotating shaft shape in which a distance B from a rear end surface of the thrust bearing 21 to the center of gravity G of the rotating shaft 12 is larger than a diameter A of an area center (radial intermediate position between the inner and outer peripheral surfaces of thrust bearing 21) C2 of the thrust bearing 21 and the radial bearing 20 extends further to the tip side than the center of gravity G of the rotating shaft 12 in the axial direction of the rotating shaft 12. A tip surface 30a of the housing 30 is formed substantially flush with a tip surface 20a of the radial bearing 20.

In the rear case 42, a turbine air supply path for supplying compressed air for operation to the turbine blade 11 is formed in a phase different from that of the bearing air supply path. In the rear case 42, a plurality of nozzles communicating with the turbine air supply path are formed with openings on an inner peripheral surface. Therefore, the rotating shaft 12 can obtain a predetermined rotation speed by controlling the flow rate of the air supplied to the turbine air supply path.

In the spindle device 10 configured as such, by supplying gas to the radial bearing 20 and the thrust bearing 21, the rotating shaft 12 is rotatably supported by the housing 30. By ejecting gas from the plurality of nozzles toward the plurality of turbine blades 11, the kinetic energy of the jet flow is converted into a rotational driving force of the rotating shaft 12 and the rotating shaft 12 is rotationally driven.

At least three (four in the present embodiment) ring grooves 35 are provided on an outer peripheral surface of the cylindrical part 31 of the housing 30 and at least three (four in the present embodiment) O-rings 61, 62, 63 and 64 are respectively arranged in those ring grooves 35. The three O-rings 61, 62, 63, and 64 are elastically deformed and some of them are in contact with the inner peripheral surface of the case 40. The housing 30 and the case 40 are arranged with a gap therebetween in the radial direction.

Due to the shape of the rotating shaft, when the distance B from the rear end surface of the thrust bearing 21 to the center of gravity G of the rotating shaft 12 is larger than the diameter A of the area center C2 of the thrust bearing 21, the four O-rings 61, 62, 63, and 64 dampen these loads and vibrations so that the vibration force due to unbalanced load or resonance is not directly transmitted to the radial bearing 20 and thrust bearing 21.

Particularly, in the axial direction of the rotating shaft 12, at least one O-ring 62 is arranged between the center C1 of the radial bearing 20 and the center of gravity G of the rotating shaft 12. As a result, when the rotating shaft 12 swings around, the load is applied to the center C1 of the radial bearing 20 and an area center C2 of the thrust bearing 21. However, by arranging the O-ring 62 at a position closer to the center of gravity G of the rotating shaft 12, it becomes easier to damp the vibration and the rotating shaft 12 can be stably rotated even when a large vibration is received.

The radial bearing 20 may have one or more axial arrangements. When a plurality of radial bearings 20 are provided, the center C1 of the radial bearings 20 refers to the center of the entirety of the plurality of radial bearings 20.

The O-ring 62 preferably does not overlap the center C1 of the radial bearing 20 in the axial direction of the rotating shaft 12.

In the axial direction of the rotating shaft 12, by further arranging the O-ring 61 on the tip side than the center of gravity G of the rotating shaft 12, it is possible to effectively reduce the unbalanced load due to the vibration applied to the tip side.

As illustrated in Fig. 2, a fulcrum distance L1 of the two O-rings 61 and 64 located at both ends in the axial direction is designed to be larger than a fulcrum distance L2 of the radial bearing 20. That is, since the spans of the O-rings 61, 62, 63, and 64 having a large vibration damping action are formed widely, the effect of further damping the vibration can be obtained depending on the tightening condition of O-rings 61, 62, 63, and 64.

The fulcrum of the radial bearing 20 may indicate both ends of the radial bearing or a fulcrum that actually functions as a spring element on the rigid support at the axial center of the radial bearing.

In the embodiment, it is assumed that the center of gravity G of the rotating shaft 12 is located closer to the tip side than the center C1 of the radial bearing 20 in a state where the bell cup 1 is attached. On the other hand, in a state where the bell cup 1 is not attached, when the center of gravity G of the rotating shaft 12 is located closer to the tip side than the center C1 of the radial bearing 20, even when the bell cup 1 is attached, since it is located closer to the tip side than the center C1 of the radial bearing 20, the configuration of the invention provides the same effect.

The two O-rings 63 and 64 may be arranged at arbitrary positions in the axial direction of the rotating shaft 12. When the bearing air supply path passes from the inner peripheral surface of the case 40 to the outer peripheral surface of the housing 30 between the two O-rings 62 and 63 or between the two O-rings 63 and 64, the two O-rings 62 and 63 or the two O-rings 63 and 64 can also serve as a seal for bearing air supply.

The invention is not limited to the embodiment described above and can be modified, improved, and the like as appropriate.

For example, in the embodiment, the spindle device of the invention is described as being used in an electrostatic coating machine. However, the invention is not limited thereto and can be applied to a semiconductor manufacturing apparatus (wafer outer peripheral chamfering machine) and an edge deburring machine for machined products.

In the embodiment, although the thrust bearing 21 and the magnet 50 are used to support the rotating shaft 12 in the thrust direction, a plurality of gas bearings may be used to support the rotating shaft 12 in the thrust direction.

The gas bearing of the invention is not limited to the one formed of a porous member and may be another static pressure type one such as a self-made throttle. However, the gas bearing using the porous member can easily ensure the rigidity, and therefore, sufficient rigidity can be ensured even when the flow rate of the gas is low.

In particular, the embodiment is used in a state where unbalanced vibration is large at high speed rotation, and therefore, when the vibration damping effect is not large, the gas bearing, which should be provided in non-contact, may be gnawed. Therefore, the gas bearing using the porous member is effective in preventing gnawing.

The radial bearings 20 may be divided into a plurality of parts in the axial direction and arranged side by side. In that case, it is preferable that the plurality of radial bearings be held by one housing 30.

In the axial direction of the rotating shaft 12, when at least one O-ring 62 is arranged between the center C1 of the radial bearing 20 and the center of gravity G of the rotating shaft 12, other O-rings may be placed at arbitrary positions before and after the O-ring 62.

### Reference Signs List

- 10:: spindle device
- 11:: turbine blade
- 12:: rotating shaft
- 20:: radial bearing
- 21:: thrust bearing
- 30:: housing
- 40:: case
- 50:: magnet
- 61, 62, 63, 64:: O-ring

## Claims

1. A spindle device (10) comprising:
a rotating shaft (12) which has a plurality of turbine blades (11) installed in a circumferential direction and is configured to mount a mounting object (1) on a tip;
a housing (30) which accommodates the rotating shaft (12);
a radial bearing (20) which is attached to the housing (30) and floatingly supports the rotating shaft (12) in a non-contact manner with respect to the housing (30) by supplying gas;
a thrust bearing (21) which is attached to the housing (30) and supports the rotating shaft (12) in a thrust direction with respect to the housing (30) by supplying gas;
a case (40) which is arranged to surround an outer peripheral surface of the housing (30); and
a plurality of O-rings (61, 62, 63, 64) which are arranged between the housing (30) and the case (40) and support the housing (30) with respect to the case (40), wherein:
the spindle device (10) rotationally drives the rotating shaft (12) by ejecting gas to the plurality of turbine blades (11);
at least one O-ring (62) is arranged between a center (C1) of the radial bearing (20) and the center of gravity (G) of the rotating shaft (12) in an axial direction of the rotating shaft (12); **characterized in that**
a distance (B) from a rear end surface of the thrust bearing (21) to a center of gravity (G) of the rotating shaft (12) is larger than a diameter (A) of an area center (C2) of the thrust bearing (21); and that
two O-rings (63, 64) are arranged on the rear end side of the housing (30) from the center (C1) of the radial bearing (20).

2. A spindle device (10) according to claim 1, wherein
at least one O-ring (61) is arranged closer to the tip side than the center of gravity (G) of the rotating shaft (12) in the axial direction of the rotating shaft (12).

3. The spindle device according to claim 1 or 2, wherein
the radial bearing (20) and the thrust bearing (21) are cylindrical porous members.

## Patentansprüche

1. Spindel-Vorrichtung (10), die umfasst:
eine rotierende Welle (12), die eine Vielzahl in einer Umfangsrichtung installierter Turbinenschaufeln (11) aufweist und die zum Montieren eines Montageobjektes (1) an einem vorderen Ende ausgeführt ist;
ein Gehäuse (30), das die rotierende Welle (12) aufnimmt;
ein Radiallager (20), das an dem Gehäuse (30) angebracht ist und die rotierende Welle (12) durch Zuführen von Gas in Bezug auf das Gehäuse (30) kontaktlos schwimmend lagert;
ein Axiallager (21), das an dem Gehäuse (30) angebracht ist und die rotierende Welle (12) durch Zuführen von Gas in einer axialen Richtung in Bezug auf das Gehäuse (30) lagert;
eine Verkleidung (40), die so angeordnet ist, dass sie eine Außenumfangsfläche des Gehäuses (30) umgibt; sowie
eine Vielzahl von O-Ringen (61, 62, 63, 64), die zwischen dem Gehäuse (30) und der Verkleidung (40) angeordnet sind und das Gehäuse (30) in Bezug auf die Verkleidung (40) lagern, wobei:
die Spindelvorrichtung (10) die rotierende Welle (12) durch Ausstoßen von Gas auf die Vielzahl von Turbinenschaufeln (11) rotierend antreibt;
wenigstens ein O-Ring (62) zwischen einer Mitte (C1) des Radiallagers (20) und dem Schwerpunkt (G) der rotierenden Welle (12) in einer axialen Richtung der rotierenden Welle (12) angeordnet ist;
**dadurch gekennzeichnet, dass**
ein Abstand (B) von einer hinteren Endfläche des Axiallagers (21) zu einem Schwerpunkt (G) der rotierenden Welle (12) größer ist als ein Durchmesser (A) einer Flächenmitte (C2) des Axiallagers (21); und dadurch, dass
zwei O-Ringe (63, 64) an der Seite eines hinteren Endes des Gehäuses (30) von der Mitte (C1) des Radiallagers (20) aus angeordnet sind.

2. Spindel-Vorrichtung (10) nach Anspruch 1, wobei
wenigstens ein O-Ring (61) in der axialen Richtung der rotierenden Welle (12) näher an der Vorderseite angeordnet ist als der Schwerpunkt (G) der rotierenden Welle (12).

3. Spindel-Vorrichtung nach Anspruch 1 oder 2, wobei das Radiallager (20) und das Axiallager (21) zylindrische poröse Elemente sind.

## Revendications

1. Dispositif formant broche (10) comprenant :
un axe tournant (12) qui possède une pluralité de pales de turbine (11) disposées dans la direction circonférentielle et qui est configuré pour supporter un objet de support (1) sur une extrémité,
une enveloppe (30) qui accueille l'axe tournant (12),
un palier radial (20) qui est fixé à l'enveloppe (30) et qui supporte l'axe tournant (12) pour qu'il puisse flotter sans contact par rapport à l'enveloppe (30) en utilisant un gaz,
un palier de butée (21) qui est fixé à l'enveloppe (30) l'axe tournant (12) dans une direction de poussée par rapport à l'enveloppe (30) en utilisant un gaz,
un boîtier (40) qui est agencé pour entourer la surface périphérique externe de l'enveloppe (30), et
une pluralité de joints toriques (61, 62, 63, 64) qui sont disposés entre l'enveloppe (30) et le boîtier (40) et qui supportent l'enveloppe (30) par rapport au boîtier (40), où
le dispositif formant broche (10) entraîne en rotation l'axe tournant (12) en éjectant un gaz vers la pluralité de pales de turbine (11),
au moins un joint torique est disposé entre le centre (C1) du palier radial (20) et le centre de gravité (G) de l'axe tournant (12) dans la direction axiale de l'axe tournant (12),
**caractérisé en ce que** :
la distance (B) depuis la surface terminale arrière du palier de butée (21) est plus grande que le diamètre (A) du centre de surface (C2) du palier de butée (21), et **en ce que** :
deux joints toriques (63, 64) sont disposés sur l'extrémité arrière de l'enveloppe (30) depuis le centre (C1) du palier radial (20).

2. Dispositif formant broche (10) selon la revendication 1, dans lequel :
au moins un joint torique (61) est disposé pour être plus proche de l'extrémité que du centre de gravité (G) de l'axe tournant (12) dans la direction axiale de l'axe tournant (12).

3. Dispositif formant broche (10) selon la revendication 1 ou la revendication 2, dans lequel :
le palier radial (20) et le palier de butée (21) sont des éléments poreux cylindriques.
